# EUROPEAN PATENT APPLICATION

(11) **EP 4 574 385 A1**
(43) Date of publication of application: **25.06.2025**
(21) Application number: 23219025.6
(22) Date of filing: 21.12.2023
(51) Int. Cl.: B29C 43/02, B29C 43/14, B65D 1/34, D21J 3/00

(54) **COMPRESSION MOULDING TOOL AND METHOD FOR MANUFACTURING A FIBROUS PULP TRAY USING THE TOOL**

(71) Applicant: Rottneros Packaging AB, 686 31 Sunne (SE)
(72) Inventor: CARLMAN, Pär, 686 95 Västra Ämtervik (SE); LUNDIN, Niklas, 686 91 Sunne (SE)
(74) Representative: Kransell & Wennborg KB

(57) **Abstract**

A compression moulding tool (100) for manufacturing a fibrous pulp tray, the tool comprising: a first female mould element (102) having a floor (104), outward sloping sidewalls (106) having a first draft angle (300), and an upper sidewall portion (108) having a second draft angle (302) which is larger than the first draft angle; a first male mould element (110) configured to press against the first female mould element to compress a fibrous pulp product located therebetween; a second female mould element (202) having a floor (204), outward sloping sidewalls (206), and an upper portion (208), wherein the upper portion of the second female mould element is substantially horizontal; and a second male mould element (210) configured to press against the second female mould element to compress a fibrous pulp product located therebetween.

## Description

### Field of the Invention

The present invention relates to a moulding tool and to a method for forming a fibrous pulp tray using the tool.

### Background of the Invention

In the food packaging industry, there is an increasing effort to remove single use plastic packaging containers from the market and to instead substitute with recyclable and renewable material containers.

Commonly used plastic containers have several drawbacks. In addition to the high environmental impact caused by persistent plastic material, most containers cannot be heated in conventional ovens. Moreover, it is not uncommon that many types of plastic packaging's get misplaced, affecting the nearby living nature.

An attractive alternative for replacing plastic and aluminum food containers is fibrous pulp trays, for example formed by compression moulding. Containers made from moulded pulp or moulded fiber can be configured to be used both for cold food and for food to be heated in a microwave oven or in a regular oven. Moreover, moulded pulp containers can be made from renewable and recycled material, and they can in turn be recycled after use, making them a sustainable alternative.

In view of the above mentioned advantages of fibrous pulp containers, it is desirable to further improve tools and method for manufacturing fibrous pulp containers to facilitate the transition from plastic and aluminum to paper-based containers.

### Summary

In view of above-mentioned and other drawbacks of the prior art, it is an object of the present invention to provide an improved compression moulding tool and method for manufacturing a fibrous pulp container using the tool.

According to a first aspect of the invention, it is provided a compression moulding tool for manufacturing a fibrous pulp tray having a floor portion and walls extending from the floor portion, the tool comprising: a first female mould element having a floor, outward sloping sidewalls having a first draft angle, and an upper sidewall portion located above and adjacent to the sidewalls, the upper sidewall portion having a second draft angle which is larger than the first draft angle; a first male mould element configured to press against the first female mould element to compress a fibrous pulp product located therebetween, the first male mould element having a shape matching the shape of the first female mould element; a second female mould element having a floor, outward sloping sidewalls having the first draft angle, and an upper portion located above and adjacent to the sidewalls, wherein the upper portion of the second female mould element is substantially horizontal; and a second male mould element configured to press against the second female mould element to compress a fibrous pulp product located therebetween, the second male mould element having a shape matching the shape of the second female mould element.

The fibrous pulp tray manufactured by the described compression moulding tool should in the present context be understood to be a container having a floor portion and a number of sidewalls so that it can contain a product. The manufactured tray will also have a substantially horizontal upper flange extending outwards from the sidewalls. Trays for food packaging typically comprises four sidewalls providing a rectangular container, but other shapes are not excluded from being manufactured using the described tool. A tray may also be referred to as a container, box, carton, package, and the like. Accordingly, the described moulds are adapted to manufacture such trays.

That the upper portion of the second female mould element is substantially horizontal means that there is no significant angle even if the upper portion may deviate somewhat from the horizontal plane. For example, a deviation in the range of ± 5° from the horizontal plane can in the present context be considered to be substantially horizontal.

The present invention is based on the realization that it is advantageous to form an upper flange in a fibrous pulp tray in two separate steps, using two different sets moulds, in order to improve the quality and reduce the number of defects in the trays. In the first set of moulds comprising the first female and male mould elements, a tray is formed having sidewalls with a first draft angle and an upper portion having a second draft angle. It is this upper portion of the tray which will form the substantially horizontal flange. In a following step, the tray is moved to the second set of mould elements where the upper portion of the tray having the second draft angle is pressed to a substantially horizontal orientation.

It has been found that by forming the angle between a nearly vertical sidewall and a horizontal flange in two steps via an intermediate angle of the flange, the risk of holes in the tray is reduced, a more even fibre distribution can be achieved, and the transition between the sidewall and the flange has a more even thickness compared to if the horizontal flange is formed in one step. The overall quality a manufacturing process can thereby be improved resulting in improved reliability and a reduced rejection rate of faulty trays.

According to an example embodiment, the outward sloping sidewalls of the first female mould element and the outward sloping sidewalls of the second female mould element are of the same height. This has the effect that the entire portion of the tray which will subsequently form the flange has the second draft angle after being pressed between the first set of mould elements. Thereby, there is only one portion of the tray which is being reformed in the second moulding step.

According to an example embodiment, the first draft angle is in the range of 5° to 30° and the second draft angle in the range of 30° to 60°. The first draft angle defines the angle of the sidewalls of the resulting tray and the second draft angle is the intermediate angle of the portion of the tray becoming the horizontal flange. A certain draft angle of the sidewalls is preferable in fibrous pulp moulding to ensure good coverage and uniformity of the pulp material. The second draft angle can be selected based on what is most suitable for a certain manufacturing process.

According to an example embodiment the first female mould element and the first male mould elements are configured to be used in a forming step and the second female mould element and the second male mould element are configured to be used in a hot-pressing step. The first forming step may be a so called cold-forming or wet-forming forming step where water of the pulp is removed by pressing the pulp between the first male and female mould without heating the moulds, thereby reducing the water content of the pulp. In the second step, heating is employed to further reduce the water content of the tray. At least one of the second female mould element and the second male moulding element may thereby comprise a heating arrangement configured to heat and dry the fibrous pulp product. After the hot-pressing step, the tray may have a sufficiently high-dry content to be ready for use.

According to an example embodiment, the compression moulding tool further comprises: a third female mould element having a floor, outward sloping sidewalls, and an upper sidewall portion located above and adjacent to the sidewalls, the upper sidewall portion having a third draft angle which is larger than the second draft angle; and a third male mould element configured to press against the third female mould element to compress a fibrous pulp product located therebetween, the third male mould element having a shape matching the shape of the third female mould element. The third set of mould elements are provided with an upper sidewall angle having an intermediate draft angle which is larger than the first angle, but which is not the horizontal alignment of the upper portion of the second mould elements. The described third set of mould elements is thereby configured to be used between the first and second sets of moulds so that the portion of the tray to form the horizontal flange is formed in three steps to further improve the quality of the tray and reducing the risk of damaging the tray during formation of the flange. The third draft angle is preferably somewhere in the middle between the second draft angle and 90° so that transition between the sidewall and the flange of the tray is formed by bending down the flange in two separate and approximately equal steps.

According to an example embodiment, at least one of the first female mould element and the first male mould element comprises a water permeable filter arranged in and configured to follow the surface of the mould element, the filter being configured to retain pulp fibers. The water permeable filter may for example be a wire mesh which is a durable alterative for retaining the pulp fibers while draining away the water. Moreover, the wire mesh can be a single layer wire mesh, a double layer wire mesh or any other type of multi-layer mesh. Furthermore, the water permeable filter may be a wire cloth, a screen, porous aluminum, or any other suitable water permeable filtering means known to the skilled person.

According to an example embodiment, at least one of the first female mould element and the first male mould element comprises a plurality of drainage channels. The drainage channels are configured to drain water from the pulp in a first pressing step, and the drainage channels are preferably connected to a pump forming a vacuum to draw water from the pulp.

According to an example embodiment, a portion of the first female mould element forming a transition between the outward sloping sidewalls and the upper sidewall portion has a curvature. A convex portion having a curvature at the transition between the sidewall and the upper sidewall portion, and a corresponding concave portion for the first male mould element, will avoid a sharp angle in the transition from the sidewall to the flange of a tray. There is thus less risk of breaking the tray when having a rounded transition in moulds. A corresponding rounded transition may be used also for the second set of moulds between the sidewalls and the horizontal portion.

According to a second aspect of the invention, it is provided a method for manufacturing a fibrous pulp tray comprising: depositing a fibrous pulp suspension in a first female mould element having a floor, outward sloping sidewalls having a first draft angle, and an upper sidewall portion located above and adjacent to the sidewalls, the upper sidewall portion having a second draft angle which is larger than the first draft angle; pressing a first male mould element against the first female mould element to dewater the fibrous pulp suspension such that a fibrous pulp product is formed therebetween, the male mould element having a surface profile matching the shape of the first female mould element; moving the fibrous pulp product from the first female mould element to a second female mould element having a floor, outward sloping sidewalls having the first draft angle, and an upper portion located above and adjacent to the sidewalls, wherein the upper portion of the second female mould element is substantially horizontal; pressing a second male mould element against the second female mould element such that the fibrous pulp product is formed therebetween, the second male mould element having a shape matching the shape of the second female mould element.

According to an example embodiment, the method further comprises draining water from the fibrous pulp material through drainage channels of at least one of the first female mould element and the first male mould element. Moreover, the fibrous pulp product is preferably dried to a dry content in the range of 20% to 45% before the step of pressing the fibrous pulp product between the second male and female mould elements. With a too low dry content, the tray may be difficult to move, and additional drying steps may be required to reach a final desired dry content of the tray, and with a too high dry content the risk of breaking the tray in the second step when the flange portion is bent down is increased.

According to an example embodiment, depositing the fibrous pulp suspension comprises dipping the first female mould element in a container comprising a fibrous pulp suspension. However, other methods of depositing a fibrous pulp are equally possible such as spraying, dipping an upside-down mould in a fibrous pulp suspension, deposition from above etc.

Furthermore, the method advantageously comprises laminating an inside of the fibrous pulp product with a plastic film. As described above, the lamination process is improved by means of the smooth inner surface of the tray.

Further effects and features of the second aspect of the invention are largely analogous to those described above in connection with the first aspect of the invention.

Further features of, and advantages with, the present invention will become apparent when studying the appended claims and the following description. The skilled person realize that different features of the present invention may be combined to create embodiments other than those described in the following, without departing from the scope of the present invention.

### Brief Description of the Drawings

These and other aspects of the present invention will now be described in more detail, with reference to the appended drawings showing an example embodiment of the invention, wherein:
Fig. 1 schematically illustrates a first set of mould elements for a compression moulding tool according to an example embodiment;
Fig. 2 schematically illustrates a second set of mould elements for a compression moulding tool according to an example embodiment;
Fig. 3 schematically illustrates details of a first female mould element of a compression moulding tool according to an example embodiment;
Fig. 4 schematically illustrates a fibrous pulp tray made by a compression moulding tool according to an example embodiment;
Fig. 5 schematically illustrates a compression moulding tool according to an example embodiment;
Figs. 6A-C schematically illustrate a compression moulding tool according to an example embodiment;
Fig. 7 schematically illustrates a detail of a compression moulding tool according to an example embodiment; and
Fig. 8 is a flow chart outlining steps of a method for manufacturing a fibrous pulp tray according to an embodiment of the invention.

### Detailed Description of Example Embodiments

In the present detailed description, various aspects and embodiments of the present invention are mainly described with reference to a manufacturing assembly comprising a compression moulding tool for manufacturing a fibrous pulp tray suitable for food packaging.

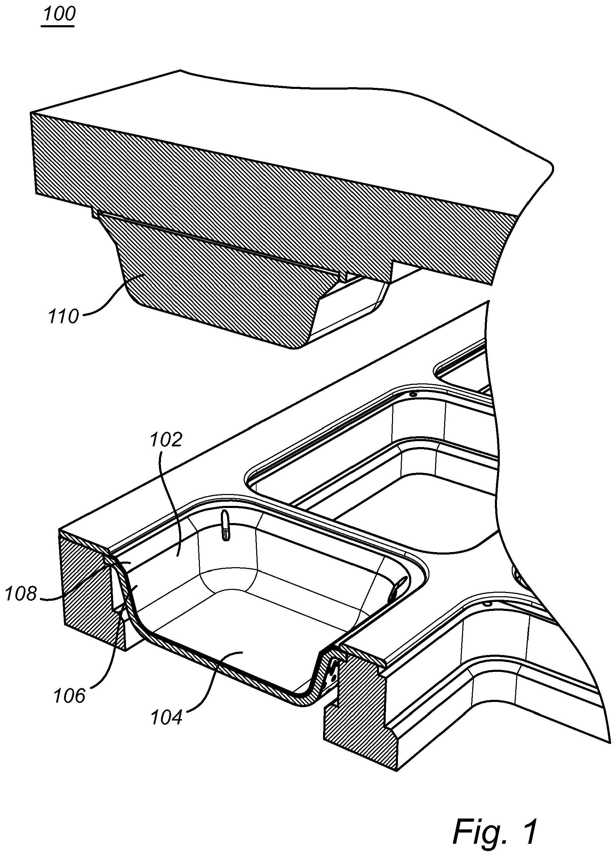

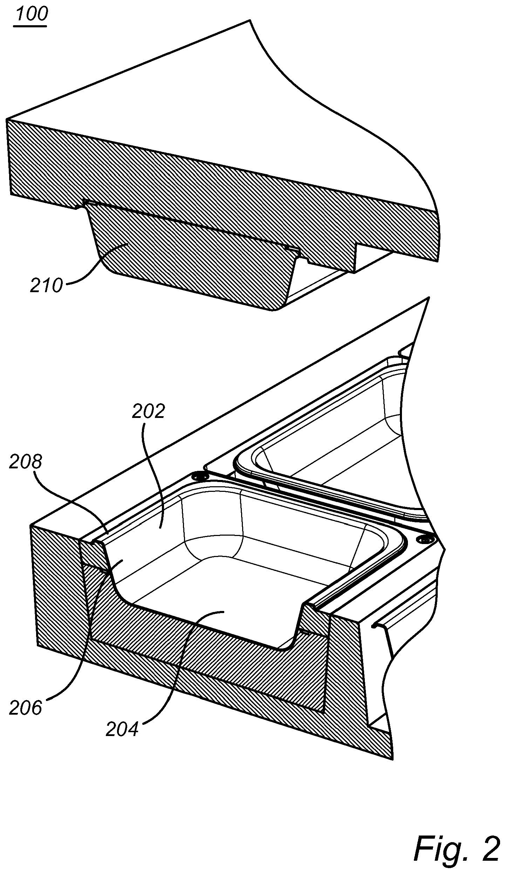

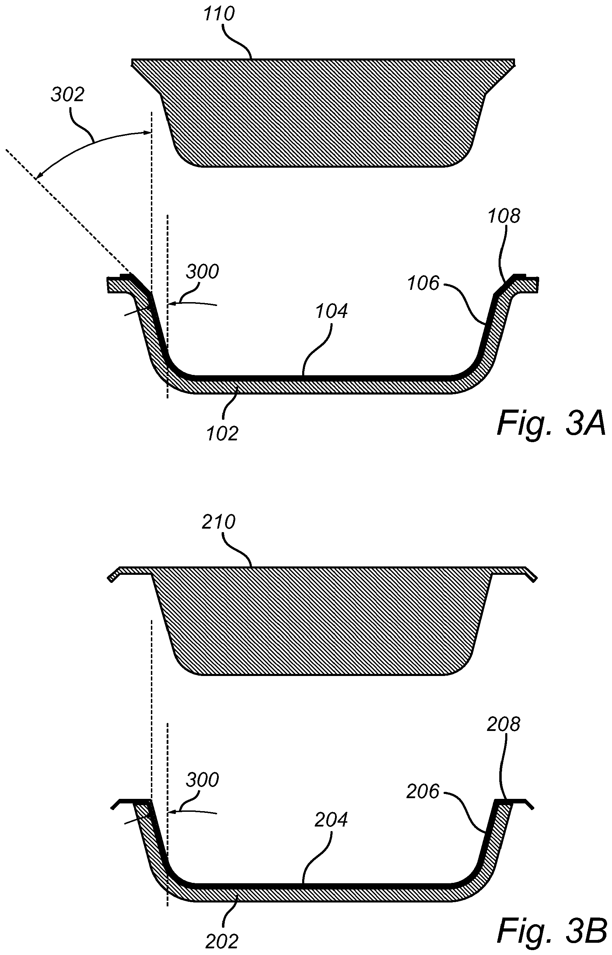

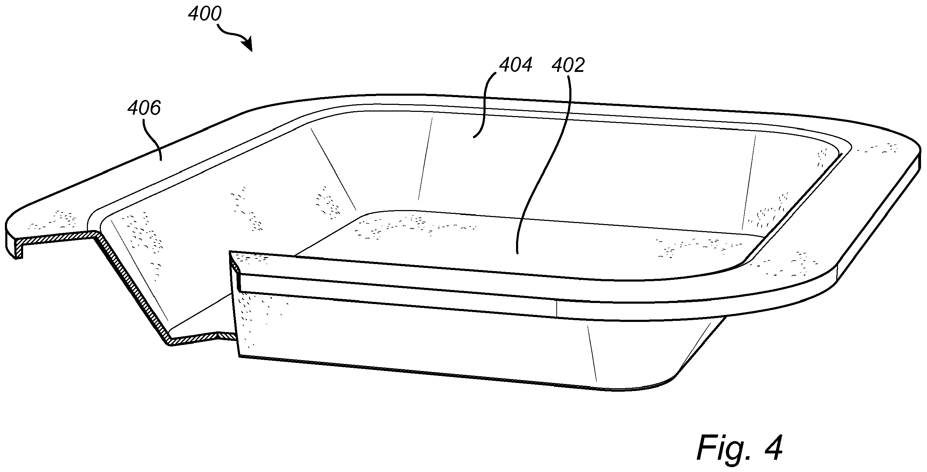

Figs. 1 and 2 schematically illustrate a compression moulding tool 100 for manufacturing a fibrous pulp tray where Fig. 1 illustrates a first set of mould elements and Fig. 2 illustrates a second set of mould elements, each set comprising a male and a female mould element. A cross section of the two sets of mould element is shown in Fig. 3, further illustrating details of the mould elements. Reference is also made to Fig. 4 illustrating an example fibrous pulp tray manufactured by the described compression moulding tool.

Fig. 1 illustrates a first female mould element 102 having a floor 104, outward sloping sidewalls 106 having a first draft angle 300, and an upper sidewall portion 108 located above and adjacent to the sidewalls, the upper sidewall portion having a second draft angle 302 which is larger than the first draft angle 300. The draft angles 300, 302 are illustrated in Fig. 3, where a draft angle is defined as a degree measurement from the vertical axis of a mould. In the present context, the first draft angle 300 is in the range of 5° to 30° and the second draft angle 302 in the range of 30° to 60°. In the illustrated example, the first draft angle is 15° and the second draft angle is 45°.

The compression moulding tool 100 further comprises a first male mould element 110 configured to press against the first female mould element 102 to compress a fibrous pulp product located therebetween. The first male mould element 110 has a shape matching the shape of the first female mould element 102 meaning that the outer surface profile of the male mould element 110 is the inverted shape of the surface profile of the female mould element 102. Thereby, a resulting fibrous pulp product has substantially the same thickness over the full area of the product. It would however be possible to provide male and female mould with somewhat different profiles in application where it is desirable to have different material thickness in different portions of a product. In the following description, any shape, profile and/or angle described with reference to one of a female and male mould element is assumed to be mirrored in the opposing mould element unless explicitly stated otherwise.

Fig. 2 schematically illustrates a second female mould element 202 having a floor 204, outward sloping sidewalls 206, and an upper portion 208 located above and adjacent to the sidewalls 208, wherein the upper portion 208 of the second female mould element 202 is substantially horizontal. Fig. 2 further illustrates a second male mould element 210 configured to press against the second female mould element 202 to compress a fibrous pulp product located therebetween, the second male mould element 210 having a shape matching the shape of the second female mould element 202.

Figs. 3A-B schematically illustrate a cross-section of the first set of mould elements 102, 110 and the second set of mould elements 202, 210. Here, the first draft angle and 300 and the second draft angle 300 are illustrated, and it can be seen that the sidewalls of the second female mould element 202 has the same draft angle 300 as the draft angle 300 of the first female mould element 102. In an example embodiment, the outward sloping sidewalls 106 of the first female mould element 102 and the outward sloping sidewalls 206 of the second female mould element 202 are of the same height.

Fig. 4 illustrates a resulting fibrous pulp tray 400 having a floor 402, outward sloping sidewalls 404, and a flange 406. The upper part of a fibrous pulp product which was formed to have the second draft angle 302 of 45° in the first set of mould elements 102, 110 will in the second set of mould elements 202, 210 thus be pressed to become substantially horizontal according to the shape of the upper portion 208 of the second female mould element 202 to form the tray 400 having a flange 406 with a substantially horizontal orientation. That the upper portion 208 of the second female mould element 202 and consequently the flange 406 of the tray 400 is substantially horizontal means that the upper portion 208 extends in the horizontal direction outwards from the sidewall 206. The upper portion 208 can have a surface profile to form a tray 400 having a profiled flange 406 as illustrated in Fig. 4, for example to provide additional structural stability to the tray 400. The flange of a tray may also have other profiles, a curved shape or the like as long as it extends in a horizontal direction from the sidewall 404.

Using the described compression moulding tool 100, the formation of the sharp transition between the sidewalls 404 and the flange 406 of the tray 400 will thus be performed in two separate steps to reduce the risk of damage or defects in the tray 400.

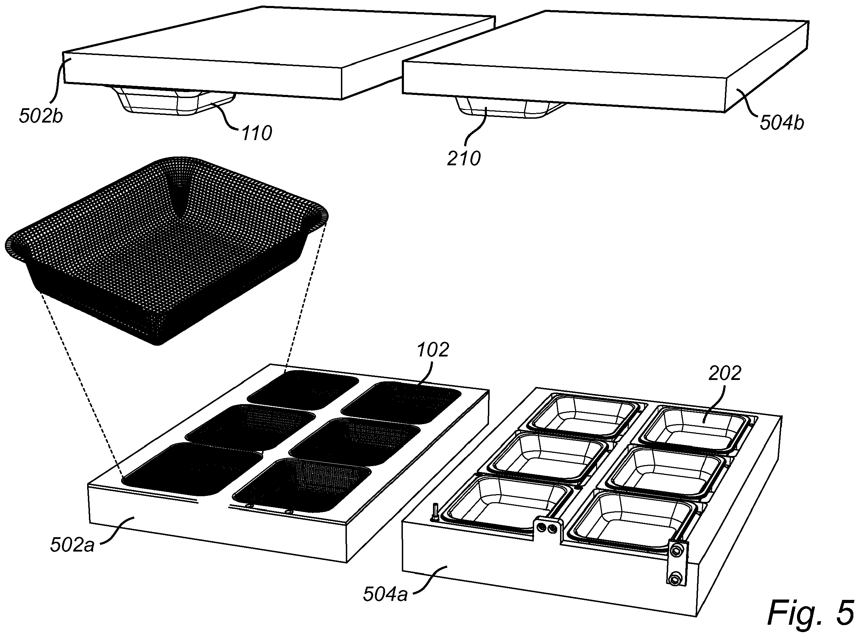

Fig. 5 illustrates an example embodiment where the first female mould element 102 comprises a water permeable filter 500 in the form of a wire mesh 500 arranged in and configured to follow the surface of the mould element 102. The illustrated wire mesh 500 is configured to retain pulp fibers while allowing water to pass through the mesh 500 in a dewatering process occurring when the first male mould element 110 is pressed against the first female mould element 102, preferably to reach a dry content in the range of 20% to 45%. In the described example, at least one of the first female mould element 102 and the first male mould element 110 comprises a plurality of drainage channels (not shown) for removing water during the forming step.

Fig. 5 further illustrates that the tool comprises first arrays of first female and male mould elements 102, 110 arranged in corresponding first tool holder frames 502a-b and second arrays of second female and male mould elements 202, 210 arranged in corresponding second tool holder frames 504a-b. The illustrated arrays are 3x3 arrays, but any number and configuration of moulds is feasible.

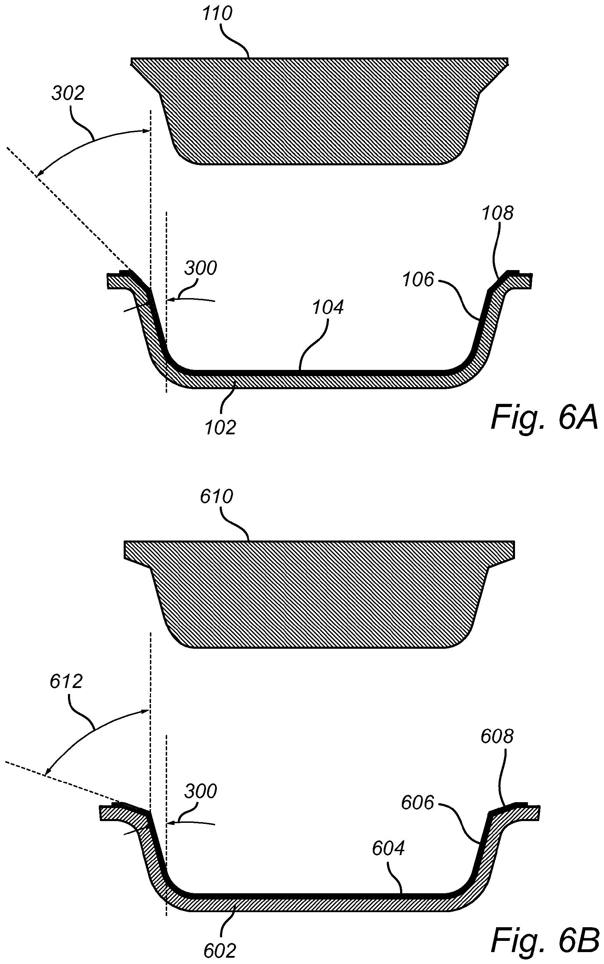

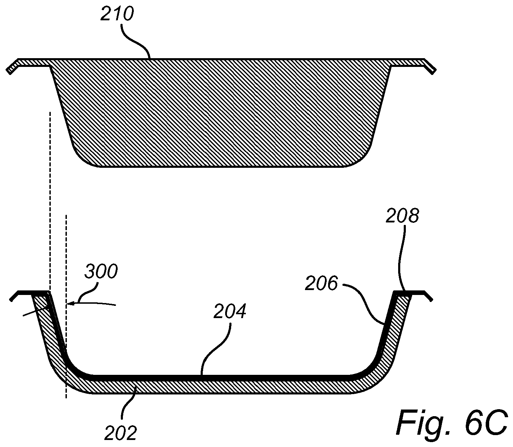

Figs. 6A-C illustrate an example embodiment of a compression moulding tool further comprising a third female mould element 602 illustrated in Fig. 6B. Fig. 6A illustrates the first set of mould elements 102, 110 and Fig. 6C illustrates the second set of mould elements 202, 210.

The third female mould element 602 has a floor 604, outward sloping sidewalls 606, and an upper sidewall portion 608 located above and adjacent to the sidewalls, the upper sidewall portion having a third draft angle 612 which is larger than the second draft angle 302 and a third male mould element 610 configured to press against the third female mould element 602 to compress a fibrous pulp product located therebetween, the third male mould element 610 having a shape matching the shape of the third female mould element 602. The moulds in Figs. 6A-C are illustrated in the order in which a manufacturing process using the described moulds would be performed, comprising three pressing steps. The first pressing step is performed using the first set of mould elements 102, 110, the second pressing step is performed using the third set of mould elements 602, 610, and the third pressing step is performed using the second set of mould elements 202, 210.

By using third set of mould elements 602, 610 having an upper portion with a third draft angle 612 lying between the second draft angle 302 and the horizontal plane, an even more gradual formation of the transition from the sidewall 404 to the flange 406 of the tray illustrated in Fig. 4 is provided. In some applications, the type of material or the size and/or shape of the tray or the flange may require such a gradual and stepwise formation of the tray to ensure a sufficiently low number of defects in the trays. The third draft angle 612 may for example be an angle approximately in the middle between the second draft angle and 90°. The second and third draft angles 302, 612 may also be selected to be approximately 30° and 60°, respectively, so that the amount of bending of the product being formed is the same in each of the first, second and third pressing step.

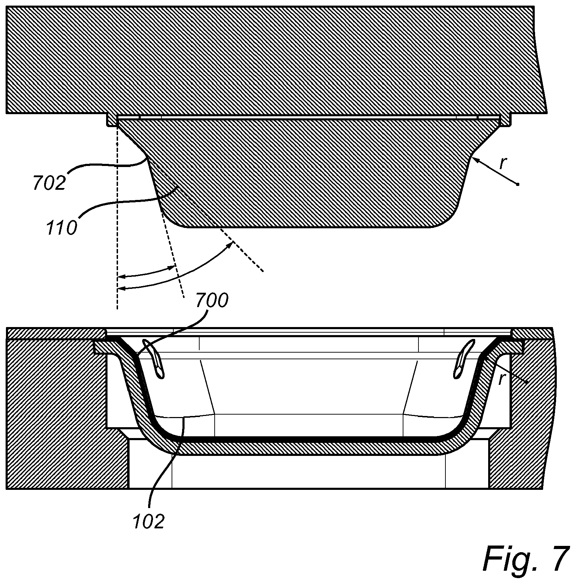

Fig. 7 schematically illustrates an example embodiment where a portion 700 of the first female mould element 102 forming a transition between the outward sloping sidewalls 106 and the upper sidewall portion 108 has a curvature r. The same curvature r is found in corresponding portion 702 of the second male mould element 210. A similar curvature may also be formed in the second set of mould elements 202, 210 at the transition from the sidewall 206 to the upper horizontal portion 208.

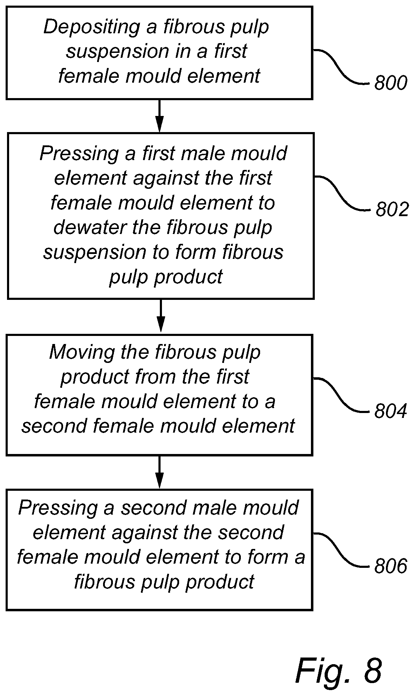

Fig. 8 is a flow chart outlining the general steps of a method of manufacturing a fibrous pulp tray 400 according to an example embodiment. The method will be described with reference to the compression molding tool described above. The method comprises depositing 800 a fibrous pulp suspension in the first female mould element 102, for example by dipping the first female mould element 102 in a container containing the fibrous pulp suspension.

The following step comprises pressing 802 the first male mould element 110 against the first female mould element to dewater the fibrous pulp suspension such that a fibrous pulp product is formed therebetween. This step can be referred to as a forming step which comprises draining water from the fibrous pulp material through drainage channels of at least one of the first female mould element 102 and the first male mould element 110.

Next, the fibrous pulp product is moved 804 from the first female mould element 102 to the second female mould element 202, for example by using vacuum to lift the fibrous pulp product from one station to the next.

The following step comprises pressing 808 a second male mould element 210 against the second female mould element 202 such that the fibrous pulp product 400 is formed therebetween, thereby forming a fibrous pulp product 600 having a floor 402, sidewalls 404 and an upper flange 406 extending from the sidewalls.

The method may further comprise laminating an inside of the fibrous pulp tray 400 with a plastic film by arranging a plastic film over the tray and heating the film so that it softens and adapts to the shape of the inner surface of the tray 400.

Even though the invention has been described with reference to specific exemplifying embodiments thereof, many different alterations, modifications and the like will become apparent for those skilled in the art. Also, it should be noted that parts of the described tool and method may be omitted, interchanged or arranged in various ways, the tool and method yet being able to perform the functionality of the present invention.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A compression moulding tool (100) for manufacturing a fibrous pulp tray, the tool comprising:
a first female mould element (102) having a floor (104), outward sloping sidewalls (106) having a first draft angle (300), and an upper sidewall portion (108) located above and adjacent to the sidewalls, the upper sidewall portion having a second draft angle (302) which is larger than the first draft angle;
a first male mould element (110) configured to press against the first female mould element to compress a fibrous pulp product located therebetween, the first male mould element having a shape matching the shape of the first female mould element;
a second female mould element (202) having a floor (204), outward sloping sidewalls (206), and an upper portion (208) located above and adjacent to the sidewalls, wherein the upper portion of the second female mould element is substantially horizontal; and
a second male mould element (210) configured to press against the second female mould element to compress a fibrous pulp product located therebetween, the second male mould element having a shape matching the shape of the second female mould element.

2. The compression moulding tool according to claim 1, wherein the outward sloping sidewalls of the first female mould element and the outward sloping sidewalls of the second female mould element are of the same height.

3. The compression moulding tool according to claim 1 or 2, wherein the first draft angle is in the range of 5° to 30° and the second draft angle in the range of 30° to 60°.

4. The compression moulding tool according to any one of the proceeding claims, wherein the first female mould element and the first male mould element are configured to be used in a forming step and the second female mould element and the second male mould element are configured to be used in a hot-pressing step.

5. The compression moulding tool according to any one of the proceeding claims, wherein at least one of the second female mould element and the second male moulding element comprises a heating arrangement configured to heat and dry the fibrous pulp product.

6. The compression moulding tool according to any one of the proceeding claims, further comprising:
a third female mould element (602) having a floor (604), outward sloping sidewalls (606), and an upper sidewall portion (608) located above and adjacent to the sidewalls, the upper sidewall portion having a third draft angle which is larger than the second draft angle; and
a third male mould element (610) configured to press against the third female mould element to compress a fibrous pulp product located therebetween, the third male mould element having a shape matching the shape of the third female mould element.

7. The compression moulding tool according to any one of the proceeding claims, wherein at least one of the first female mould element and the first male mould element comprises a water permeable filter (500) arranged in and configured to follow the surface of the mould element, the filter being configured to retain pulp fibers.

8. The compression moulding tool according to claim 7, wherein the water permeable filter is a wire mesh.

9. The compression moulding tool according to any one of the preceding claims, wherein at least one of the first female mould element and the first male mould element comprises a plurality of drainage channels.

10. The compression moulding tool according to any one of the preceding claims, wherein a portion () of the second female mould element forming a transition between the outward sloping sidewalls and the upper portion has a curvature.

11. Method for manufacturing a fibrous pulp tray comprising:
depositing (800) a fibrous pulp suspension in a first female mould element (102) having a floor (104), outward sloping sidewalls (106) having a first draft angle, and an upper sidewall portion (108) located above and adjacent to the sidewalls, the upper sidewall portion having a second draft angle which is larger than the first draft angle;
pressing (802) a first male mould element against the first female mould element to dewater the fibrous pulp suspension such that a fibrous pulp product is formed therebetween, the male mould element having a surface profile matching the shape of the first female mould element;
moving (804) the fibrous pulp product from the first female mould element to a second female mould element (202) having a floor (204), outward sloping sidewalls (206) having the first draft angle, and an upper portion (208) located above and adjacent to the sidewalls, wherein the upper portion of the second female mould element is substantially horizontal;
pressing (806) a second male mould element (210) against the second female mould element such that the fibrous pulp product is formed therebetween, the second male mould element having a shape matching the shape of the second female mould element.

12. The method according to claim 11, further comprising:
draining water from the fibrous pulp material through drainage channels of at least one of the first female mould element and the first male mould element.

13. The method according to claim 11 or 12, further comprising drying the fibrous pulp product to a dry content in the range of 20% to 45% before the step of pressing the fibrous pulp product between the second male and female mould elements.

14. The method according to any one of claims 11 to 13 wherein depositing the fibrous pulp suspension comprises dipping the first female mould element in a container comprising a fibrous pulp suspension.

15. The method according to any one of claims 11 to 14, further comprising laminating an inside of the fibrous pulp product with a plastic film.
